(19) Europäisches Patentamt / European Patent Office / Office européen des brevets

(11) **EP 3 375 111 B1**

(12) **FASCICULE DE BREVET EUROPEEN**

(45) Date de publication et mention
de la délivrance du brevet:
**03.04.2019 Bulletin 2019/14**

(21) Numéro de dépôt: **16825517.2**

(22) Date de dépôt: **14.12.2016**

(51) Int Cl.:
**H04B 7/195** *(2006.01)*    **B64G 1/10** *(2006.01)*

(86) Numéro de dépôt international:
**PCT/FR2016/053432**

(87) Numéro de publication internationale:
**WO 2017/103481 (22.06.2017 Gazette 2017/25)**

(54) **PROCÉDÉ ET SYSTÈME D'ACQUISITION D'IMAGES PAR UNE CONSTELLATION DE SATELLITES D'OBSERVATION**

VERFAHREN UND SYSTEM ZUR ERFASSUNG VON BILDERN ÜBER EINE KONSTELLATION VON BEOBACHTUNGSSATELLITEN

METHOD AND SYSTEM FOR ACQUIRING IMAGES VIA A CONSTELLATION OF OBSERVATION SATELLITES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562765**

(43) Date de publication de la demande:
**19.09.2018 Bulletin 2018/38**

(73) Titulaire: **Airbus Defence and Space SAS
31402 Toulouse Cedex 4 (FR)**

(72) Inventeur: **GIRAUD, Emmanuel
31750 Escalquens (FR)**

(74) Mandataire: **Ipside
6, Impasse Michel Labrousse
31100 Toulouse (FR)**

(56) Documents cités:
**DE-A1-102008 006 432    US-A1- 2014 039 963
US-B1- 7 502 382**

• **J.P. Gastellu-Etchegorry: "Acquisition et traitement d'image numérique", Internet , 1 avril 2008 (2008-04-01), pages 77-85, XP002761756, France, Université Paul Sabatier Extrait de l'Internet:
URL:http://www.cesbio.ups-tlse.fr/data_all /pdf/TI08.pdf [extrait le 2016-09-13]**

**Description**

## DOMAINE TECHNIQUE

La présente invention appartient au domaine de l'observation de la Terre, et concerne plus particulièrement un procédé et un système d'acquisition d'images par une constellation de satellites en orbite non-géosynchrone.

## ÉTAT DE LA TECHNIQUE

Les missions d'observation terrestre effectuées par un satellite d'observation consistent à acquérir des images de zones terrestres, c'est-à-dire situées à la surface de la Terre, en réponse à des requêtes émises par des clients. Généralement, un satellite d'observation est placé sur une orbite terrestre non-géosynchrone de sorte à être en mesure d'acquérir différentes zones terrestres au cours du temps, suivant sa position sur l'orbite considérée.

En outre, le développement de l'agilité des satellites d'observation permet d'accroître le nombre de zones terrestres pouvant être imagées, ces dernières pouvant désormais être notamment situées de part et d'autre de la projection de l'orbite sur la surface de la Terre, par un contrôle adapté de l'attitude du satellite d'observation. Ainsi, pour chaque position d'un satellite d'observation sur son orbite, il existe plusieurs possibilités pour la zone terrestre à imager.

Généralement, un plan de travail, comportant une liste d'acquisitions à réaliser par un satellite d'observation, est calculé au sol en fonction des différentes requêtes reçues de clients. Le plan de travail ainsi calculé est émis, par une station sol, à destination du satellite d'observation. Un nouveau plan de travail est calculé et émis à un satellite d'observation de manière régulière, généralement sur une base journalière.

Actuellement, les requêtes pour de telles acquisitions de zones terrestres sont en nombre croissant, et doivent être satisfaites dans un délai de plus en plus court, du fait notamment d'une ouverture de plus en plus importante du marché de l'imagerie au grand public.

L'augmentation du nombre de satellites d'observation donne la possibilité d'avoir des accès satellites sur une zone terrestre dans des délais beaucoup plus courts. Cependant cette capacité ne peut être pleinement utilisée que si l'actualisation du plan de travail de chaque satellite d'observation peut également être effectuée dans des délais courts.

Dans le cas des missions d'observation, l'inclinaison des orbites considérées est telle que les satellites d'observation passent à proximité des pôles de la Terre, et les stations sol sont préférentiellement positionnées à proximité d'un pôle de la Terre, généralement le pôle Nord. Il en résulte qu'un plan de travail actualisé ne peut être transmis à un satellite d'observation donné que lorsque ledit satellite d'observation survole ladite station sol, ce qui se produit au mieux une fois par période orbitale, le positionnement de la station sol à proximité d'un pôle de la Terre permettant d'augmenter, sur une journée, le nombre de périodes orbitales au cours desquelles ledit satellite d'observation survole effectivement ladite station sol. Or les périodes orbitales des satellites d'observation actuels sont généralement supérieures à une heure, alors qu'il est souhaité pouvoir actualiser le plan de travail de chaque satellite d'observation dans un délai beaucoup plus court, de l'ordre de la dizaine de minutes.

En outre, le temps de réponse à une requête dépend non seulement du temps nécessaire pour communiquer un plan de travail actualisé à un satellite d'observation, mais dépend également, notamment, du temps nécessaire pour récupérer les images acquises par le satellite d'observation en réponse à cette requête. La récupération des images acquises est généralement effectuée, comme pour l'actualisation du plan de travail, à proximité du pôle Nord, lorsque le satellite d'observation émet lesdites images acquises à destination d'une station sol. Par conséquent, entre l'instant auquel le satellite d'observation reçoit un plan de travail actualisé et l'instant auquel les images, acquises en réponse à ce plan de travail actualisé, sont reçues par une station sol, il s'écoule, dans le meilleur des cas, une période orbitale. Un exemple de l'art antérieur est décrit dans DE 10 2008 006 432.

## EXPOSÉ DE L'INVENTION

La présente invention a pour objectif de remédier à tout ou partie des limitations des solutions de l'art antérieur, notamment celles exposées ci-avant, en proposant une solution qui permette de réduire le temps nécessaire pour répondre à une requête d'acquisition d'image.

En particulier, la présente invention vise, dans le cas d'un système d'acquisition d'images comportant une constellation de satellites, à réduire le temps nécessaire pour communiquer un plan de travail actualisé à l'un quelconque desdits satellites d'observation.

A cet effet, et selon un premier aspect, l'invention concerne un procédé d'acquisition d'images au moyen d'une constellation de satellites en orbite terrestre non-géosynchrone, chaque satellite comportant un instrument d'observation commandé selon un plan de travail comportant une liste d'acquisitions à réaliser. Lesdits satellites comportant des moyens de communication inter-satellite respectifs et étant configurés de sorte que chaque satellite peut échanger des données avec l'un quelconque des autres satellites de la constellation, directement ou par l'intermédiaire d'un ou de plusieurs autres satellites de la constellation, ledit procédé d'acquisition comporte :

- la formation d'un agrégat de plans de travail destinés à différents satellites de la constellation,
- l'émission, par une station sol, de l'agrégat à destination d'un satellite de la constellation,
- la réémission, par le satellite ayant reçu l'agrégat à partir de la station sol, dudit agrégat à destination d'au moins un autre satellite de la constellation.

En outre, chaque satellite qui reçoit l'agrégat à partir d'un autre satellite réémet ledit agrégat à destination d'au moins un autre satellite de la constellation si ledit agrégat comporte un plan de travail qui n'a pas encore été communiqué au satellite auquel il est destiné, chaque satellite récupérant, dans l'agrégat reçu, le plan de travail qui lui est destiné.

Ainsi, la présente invention repose sur la formation d'un agrégat de plans de travail destinés à plusieurs satellites de la constellation. L'agrégat est émis par une station sol à destination de l'un quelconque des satellites de la constellation, est ensuite propagé de proche en proche, d'un satellite de la constellation à un autre, grâce aux moyens de communication inter-satellite desdits satellites. Par conséquent, chaque satellite de la constellation peut recevoir l'agrégat, et ce quel que soit le satellite qui a initialement reçu ledit agrégat à partir de la station sol, et récupérer dans celui-ci le plan de travail qui lui est destiné, si toutefois un tel plan de travail est présent dans l'agrégat.

Puisque l'agrégat, qui comporte des plans de travail destinés à plusieurs satellites, peut être émis initialement à l'un quelconque des satellites de la constellation, les opportunités pour transférer les plans de travail à la constellation de satellites sont plus nombreuses que dans les solutions de l'art antérieur. En effet, le survol d'une station sol par un satellite est plus fréquent dans le cas d'une constellation de satellites.

En outre, la vitesse avec laquelle l'agrégat peut être propagé au sein de la constellation de satellites est supérieure à la vitesse de défilement des satellites sur leurs orbites non-géosynchrones respectives. Par conséquent, le temps nécessaire pour communiquer l'agrégat de plans de travail, à partir d'un satellite survolant la station sol, à un autre satellite de la constellation est inférieur au temps nécessaire pour que ledit autre satellite parcoure la distance lui permettant de survoler la station sol.

Par conséquent, du fait que l'agrégat peut être émis à l'un quelconque des satellites de la constellation, et du fait de la propagation dudit agrégat de proche en proche, d'un satellite de la constellation à un autre, le temps nécessaire pour communiquer un plan de travail à l'un quelconque desdits satellites de la constellation est grandement réduit par rapport aux solutions de l'art antérieur.

En outre, il est dès lors possible de communiquer rapidement, à partir d'une station sol située à proximité du pôle Nord, un plan de travail à un satellite survolant le pôle Sud, ledit plan de travail comportant une liste d'acquisitions à réaliser lors de la remontée dudit satellite du pôle Sud vers le pôle Nord. Dans un tel cas, les images acquises par ce satellite peuvent être récupérées lorsqu'il survole le pôle Nord, au bout d'une demi-période orbitale.

Dans des modes particuliers de mise en oeuvre, le procédé d'acquisition d'images peut comporter en outre l'une ou plusieurs des caractéristiques suivantes, prises isolément ou selon toutes les combinaisons techniquement possibles.

Dans des modes particuliers de mise en oeuvre, chaque satellite qui récupère un plan de travail retire ledit plan de travail de l'agrégat avant de réémettre ledit agrégat.

De telles dispositions sont particulièrement avantageuses, dans la mesure où la quantité de données réémises par un satellite est inférieure à la quantité de données reçues. Par conséquent, le temps nécessaire pour communiquer l'agrégat à l'ensemble des satellites de la constellation est diminué, puisque la quantité de données représentée par l'agrégat, et donc la durée nécessaire pour échanger l'agrégat entre deux satellites de la constellation, diminue à chaque réémission.

Dans des modes particuliers de mise en oeuvre, chaque satellite qui réémet l'agrégat retire dudit agrégat chaque plan de travail qui a déjà été communiqué au satellite auquel il est destiné.

De telles dispositions sont particulièrement avantageuses, dans la mesure où elles permettent de diminuer encore plus la quantité de données réémises par les satellites, et le temps nécessaire pour communiquer l'agrégat à l'ensemble des satellites de la constellation.

Dans des modes particuliers de mise en oeuvre, l'agrégat comporte une information de contrôle permettant à un satellite de déterminer si l'agrégat reçu doit être réémis.

Dans des modes particuliers de mise en oeuvre, l'information de contrôle correspond à un compteur de réémissions dont la valeur est actualisée par les satellites ou à un identifiant du satellite ayant reçu l'agrégat à partir de la station sol.

Selon un second aspect, la présente invention concerne un système d'observation comportant une constellation de satellites en orbite terrestre non-géosynchrone, chaque satellite comportant un instrument d'observation et un dispositif de contrôle configuré pour commander ledit instrument d'observation selon un plan de travail comportant une liste d'acquisitions à réaliser. En outre, lesdits satellites comportent des moyens de communication inter-satellite respectifs et sont configurés de sorte que chaque satellite peut échanger des données avec l'un quelconque des autres satellites de la constellation, directement ou par l'intermédiaire d'un ou de plusieurs autres satellites de la constellation, et le dispositif de contrôle de chaque satellite est configuré pour récupérer un plan de travail qui lui est destiné dans un agrégat de plans de travail reçu par les moyens de communication inter-satellite dudit satellite, et pour réémettre ledit agrégat par lesdits moyens de communication inter-satellite si ledit agrégat comporte un plan de travail qui n'a pas encore été communiqué à un satellite de la constellation.

Dans des modes particuliers de réalisation, le système d'observation peut comporter en outre l'une ou plusieurs des caractéristiques suivantes, prises isolément ou selon toutes les combinaisons techniquement possibles.

Dans des modes particuliers de réalisation, les satellites de la constellation sont répartis sur au moins deux orbites différentes de même inclinaison et de même altitude.

Du fait que les satellites de la constellation sont répartis dans au moins deux orbites différentes, et donc dans au moins deux plans d'orbite différents, la surface géographique couverte par la constellation de satellites, sur la durée d'une période orbitale, est plus importante que dans le cas où tous les satellites sont situés dans un même plan d'orbite. Les satellites situés sur des orbites différentes peuvent également échanger des données entre eux, de sorte que le satellite qui reçoit l'agrégat à partir de la station sol peut toujours propager ledit agrégat à l'un quelconque des autres satellites de la constellation, y compris à un satellite sur une autre orbite, et ce dans un temps limité.

Dans des modes particuliers de réalisation, plusieurs satellites sont répartis de manière régulière sur chaque orbite, les satellites d'orbites différentes sont décalés les uns par rapport aux autres, et le nombre de satellites sur chaque orbite et le décalage entre satellites d'orbites différentes sont tels que, pour chaque satellite :

- les autres satellites sur la même orbite sont masqués par la Terre,
- au moins deux satellites sur une autre orbite ne sont pas masqués par la Terre.

De telles dispositions sont avantageuses en ce qu'elles permettent de limiter l'impact des besoins en termes de communications inter-satellites sur le nombre total de satellites de la constellation, dont la mission principale est d'acquérir des images. En effet, le nombre de satellites sur une même orbite est limité, tel que deux satellites sur une même orbite ne peuvent pas échanger directement de données entre eux. La communication de l'agrégat à l'un quelconque des satellites de la constellation est néanmoins assurée par la propagation de proche en proche entre satellites sur des orbites différentes.

Dans des modes particuliers de réalisation, les orbites des satellites de la constellation sont des orbites héliosynchrones.

Dans des modes particuliers de réalisation, la distance angulaire entre chaque paire d'orbites adjacentes est inférieure à 3 heures.

Dans des modes particuliers de réalisation, les moyens de communication inter-satellite de chaque satellite sont bidirectionnels vers deux zones différentes de part et d'autre dudit satellite.

Dans des modes particuliers de réalisation, les moyens de communication inter-satellite de chaque satellite comportent deux antennes dirigées vers des zones respectives différentes de part et d'autre dudit satellite.

Dans des modes particuliers de réalisation, les moyens de communication inter-satellite sont adaptés à émettre et à recevoir des données par chacune desdites deux antennes.

Dans des modes particuliers de réalisation, pour chaque satellite, les directions principales de rayonnement respectives des deux antennes sont fixes par rapport à un corps dudit satellite.

Dans des modes particuliers de réalisation, pour chaque satellite, les directions principales de rayonnement respectives des deux antennes sont, lorsque ledit satellite est placé dans une attitude de mission, confondues avec un axe de roulis dudit satellite, et les lobes principaux de rayonnement respectifs desdites deux antennes sont globalement invariants par rotation autour de leurs directions principales de rayonnement.

Du fait que les lobes principaux de rayonnement respectifs desdites antennes sont invariants par rotation autour de l'axe de roulis lorsque le satellite est placé dans son orbite de mission, les zones couvertes par lesdites antennes sont sensiblement les mêmes quelle que soit l'attitude en roulis du satellite autour de cet axe de roulis. Par conséquent, les échanges de données entre satellites sont possibles quelle que soit l'attitude en roulis de chaque satellite, qui est généralement imposée par la position du satellite par rapport à la zone terrestre à imager. Ainsi, les échanges de données entre satellites sont possibles y compris lorsque les satellites sont en cours d'acquisition d'images.

Dans des modes particuliers de réalisation, les moyens de communication inter-satellite de chaque satellite émettent et reçoivent des données dans la même bande de fréquence.

Dans des modes particuliers de réalisation, les moyens de communication inter-satellite de chaque satellite sont de type semi-duplex.

Dans des modes particuliers de réalisation, le système d'observation comporte un centre de planification d'acquisitions configuré pour former un agrégat de plans de travail destinés à différents satellites de la constellation, et une station sol adaptée à émettre ledit agrégat à destination d'un satellite de la constellation.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système d'acquisition d'images comportant une constellation de satellites en orbite terrestre non-géosynchrone,
- Figure 2 : un diagramme illustrant les principales étapes d'un procédé d'acquisition d'images,
- Figure 3 : un diagramme illustrant le principe de fonctionnement d'un mode préféré de mise en oeuvre du procédé d'acquisition d'images de la figure 2,
- Figure 4 : une représentation schématique d'un mode préféré de réalisation d'un satellite du système d'acquisition d'images,
- Figure 5 : un diagramme illustrant un exemple de mise en oeuvre du procédé d'acquisition d'images dans le cas d'une constellation de satellites répartis sur quatre orbites différentes.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

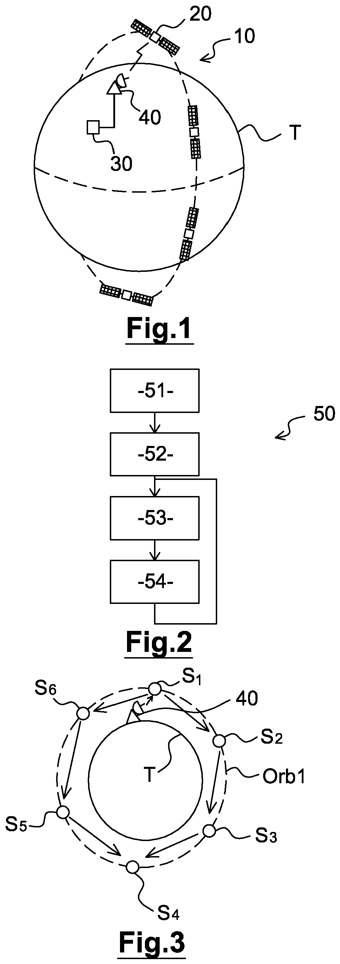

La figure 1 représente schématiquement un système 10 d'acquisition d'images de zones à la surface de la Terre T au moyen d'une constellation de satellites 20 en orbite terrestre non-géosynchrone. Dans la suite de la description, on désignée par $N_{CONS}$ le nombre total de satellites 20 de la constellation.

Chaque satellite 20 de la constellation comporte un instrument d'observation 21 et un dispositif de contrôle (non représenté sur les figures) qui commande ledit instrument d'observation 21 selon un plan de travail comportant une liste d'acquisitions à réaliser.

Les plans de travail destinés aux différents satellites 20 de la constellation sont par exemple calculés par un centre 30 de planification d'acquisitions, en fonction de requêtes émises par des clients. Les plans de travail sont transmis aux satellites 20 de la constellation par l'intermédiaire d'une station sol 40 reliée audit centre 30 de planification d'acquisitions.

Dans l'exemple non limitatif illustré par la figure 1, le centre 30 de planification d'acquisitions et la station sol 40 sont des équipements distincts. Rien n'exclut cependant, suivant d'autres exemples, qu'un même équipement opère à la fois en tant que centre 30 de planification d'acquisitions et en tant que station sol 40. En outre, le système 10 d'acquisition d'images peut comporter, dans des modes particuliers de réalisation, plusieurs centres 30 de planification d'acquisitions et/ou plusieurs stations sol 40 adaptées à émettre des plans de travail aux satellites 20 de la constellation.

Avantageusement, les satellites 20 de la constellation comportent en outre des moyens de communication inter-satellite respectifs, par lesquels lesdits satellites peuvent échanger des données entre eux.

Plus particulièrement, les moyens de communication inter-satellite des différents satellites 20 de la constellation sont mis en oeuvre pour relayer un ou plusieurs plans de travail d'un satellite 20 à un autre de la constellation, jusqu'à ce que chaque plan de travail atteigne le satellite 20 auquel il est destiné.

Par conséquent, les paramètres de la constellation, en termes d'orbites et de positions sur orbite respectives des différents satellites 20, mais également les moyens de communication inter-satellite respectifs des différents satellites 20, doivent être dimensionnés de sorte que chaque satellite 20 peut échanger des données avec l'un quelconque des autres satellites 20 de la constellation, directement ou par l'intermédiaire d'un ou plusieurs autres satellites 20 de la constellation, qui le cas échéant relaient les données reçues d'un satellite vers un autre satellite de la constellation. On comprend donc que chaque satellite 20 doit pouvoir notamment échanger des données avec au moins deux autres satellites 20 de la constellation, afin de pouvoir recevoir des données d'un premier satellite et réémettre lesdites données à destination d'un second satellite de la constellation.

Des exemples plus détaillés de configurations adaptées des satellites 20 (en termes de paramètres de la constellation et de moyens de communication inter-satellite) sont décrits ci-après.

La figure 2 représente schématiquement les principales étapes d'un procédé 50 d'acquisition d'images.

Tel qu'illustré par la figure 2, le procédé 50 d'acquisition d'images comporte une étape 51 de formation, par le centre 30 de planification d'acquisitions, d'un agrégat d'au moins deux plans de travail destinés à différents satellites 20 de la constellation. Il est à noter que le nombre de plans de travail inclus dans l'agrégat est préférentiellement égal à $N_{CONS}$, c'est-à-dire qu'il comporte un plan de travail pour chaque satellite 20 de la constellation. Toutefois, le nombre de plans de travail inclus dans l'agrégat peut également être inférieur à $N_{CONS}$, c'est-à-dire que l'agrégat ne comporte pas nécessairement un plan de travail pour chaque satellite 20 de la constellation. En effet, l'étape 51 de formation de l'agrégat étant exécutée de manière récurrente, afin d'actualiser les plans de travail des différents satellites 20 pour tenir compte de nouvelles requêtes émises par des clients, il est possible que seule une partie desdits plans de travail doive être actualisée, auquel cas il est avantageux de n'inclure dans l'agrégat que les plans de travail qui ont été actualisés depuis la précédente formation d'agrégat de plans de travail. Il est également possible, notamment, de séparer les $N_{CONS}$ plans de travail destinés aux différents satellites 20 de la constellation en plusieurs agrégats.

Ensuite, le procédé 50 d'acquisition comporte une étape 52 d'émission, par la station sol 40, de l'agrégat de plans de travail à destination d'un satellite 20 de la constellation. Le satellite 20 auquel l'agrégat est émis est typiquement le premier satellite 20 de la constellation qui survole la station sol 40 après que ladite station sol 40 a reçu l'agrégat du centre 30 de planification d'acquisitions. On comprend donc que, en pratique, chaque satellite 20 de la constellation peut être amené à recevoir un agrégat comportant des plans de travail d'autres satellites 20 de la constellation.

Si l'agrégat comporte un plan de travail destiné au satellite 20 qui reçoit ledit agrégat à partir de la station sol 40, alors ce satellite 20 récupère ledit plan de travail qui lui est destiné, au cours d'une étape 53 de récupération dudit plan de travail. Afin de permettre au satellite 20 d'identifier, dans l'agrégat, un plan de travail qui lui est destiné, ledit agrégat peut comporter par exemple, pour chaque plan de travail, un identifiant du satellite 20 destinataire, ou toute autre information adaptée.

Le procédé 50 d'acquisition d'images comporte ensuite une étape 54 de réémission, par le satellite 20 ayant reçu l'agrégat à partir de la station sol 40, dudit agrégat à destination d'au moins un autre satellite de la constellation.

Chaque satellite 20 qui reçoit l'agrégat exécute à son tour l'étape 53 de récupération de plan de travail, si l'agrégat comporte un plan de travail destiné au satellite 20 considéré. En outre, chaque satellite 20 exécute à son tour l'étape 54 de réémission dudit agrégat à destination d'au moins un autre satellite 20 de la constellation, si ledit agrégat comporte un plan de travail qui n'a pas encore été communiqué au satellite auquel il est destiné. En d'autres termes, chaque satellite 20 relaie l'agrégat reçu jusqu'à ce que chaque plan de travail inclus dans l'agrégat ait été communiqué au satellite destinataire.

Dans la suite de la description, on se place de manière non limitative dans le cas où l'agrégat formé par le centre 30 de planification d'acquisitions comporte toujours $N_{CONS}$ plans de travail, c'est-à-dire qu'il comporte toujours un plan de travail pour chaque satellite 20 de la constellation.

Plusieurs méthodes sont possibles pour permettre à un satellite 20 de déterminer si l'agrégat reçu doit être réémis, et le choix d'une méthode particulière ne constitue qu'une variante d'implémentation de l'invention.

Suivant un premier exemple, la station sol 40 peut émettre un agrégat actualisé à des instants prédéterminés connus des satellites 20 de la constellation, dits « instants d'actualisation ». Dans un tel cas, les satellites 20 peuvent être configurés pour réémettre systématiquement un agrégat reçu au cours d'un intervalle de temps de durée prédéterminée suivant un instant d'actualisation. La durée prédéterminée de l'intervalle de temps est choisie de sorte à assurer que l'agrégat est relayé suffisamment longtemps pour que chaque satellite 20 puisse recevoir le plan de travail qui lui est destiné.

Suivant un second exemple, les satellites 20 peuvent être configurés pour relayer un même agrégat un nombre maximal prédéfini de fois, de préférence une seul fois. En effet, il peut être considéré qu'il n'est pas nécessaire, lorsqu'un satellite 20 qui a déjà reçu et réémis un agrégat, de réémettre ledit agrégat s'il est à nouveau reçu par le même satellite 20.

Dans des modes particuliers de mise en oeuvre, l'agrégat peut comporter une information de contrôle permettant à un satellite 20 qui le reçoit de déterminer si ledit agrégat doit être réémis.

Par exemple, l'information de contrôle peut comporter un compteur de réémissions dont la valeur est actualisée par les satellites 20. En effet, pour une constellation donnée, il est possible de déterminer a priori un nombre $N_{HOP}$ de réémissions permettant d'assurer que chaque satellite 20 reçoit le plan de travail qui lui est destiné, et ce quel que soit le satellite 20 qui reçoit initialement l'agrégat à partir de la station sol 40. Par conséquent, si l'agrégat comporte un compteur de réémissions dont la valeur est actualisée par les satellites 20, chaque satellite 20 est en mesure de déterminer si un agrégat reçu doit être réémis. Par exemple, le compteur de réémissions peut être initialisé à la valeur $N_{HOP}$ et décrémenté par chaque satellite 20 avant réémission. Par conséquent, si le compteur de réémissions inclus dans l'agrégat reçu par un satellite 20 est égal à 0, alors ledit satellite 20 ne réémet pas ledit agrégat.

Alternativement ou en complément, l'information de contrôle peut comporter un identifiant du satellite 20 ayant reçu l'agrégat à partir de la station sol 40. En effet, pour une constellation donnée, les satellites 20 qui doivent relayer l'agrégat reçu peuvent être entièrement déterminés par le satellite 20 qui reçoit initialement l'agrégat à partir de la station sol 40. Dans un tel cas, chaque satellite 20 qui reçoit l'agrégat peut déterminer, en fonction de l'identifiant du satellite 20 ayant reçu en premier ledit agrégat, s'il doit réémettre ou non ledit agrégat pour assurer que chaque plan de travail est communiqué au satellite 20 auquel il est destiné.

Dans des modes préférés de mise en oeuvre du procédé 50 d'acquisition d'images, chaque satellite 20 qui réémet l'agrégat retire avant réémission un ou plusieurs plans de travail dudit agrégat, de sorte que la quantité de données réémises par chaque satellite 20 diminue au fur et à mesure que l'agrégat se propage au sein de la constellation de satellites 20. De telles dispositions sont particulièrement avantageuses en ce qu'elles permettent de diminuer le temps nécessaire pour communiquer l'agrégat à l'ensemble des satellites de la constellation.

Par exemple, chaque satellite 20 qui récupère un plan de travail retire ledit plan de travail de l'agrégat avant de le réémettre.

Toutefois, la quantité de données réémises peut être éventuellement encore plus diminuée, en particulier si chaque satellite 20 est adapté à réémettre l'agrégat à destination de plusieurs autres satellites 20. Dans un tel cas, à chaque réémission, plusieurs satellites 20 sont atteints. Par conséquent, le nombre de satellites 20 atteints avec un même nombre de réémissions peut être supérieur à ce nombre de réémissions. On comprend donc qu'un satellite 20 peut retirer de l'agrégat, avant de le réémettre, tous les plans de travail qui peuvent être communiqués à leurs satellites 20 destinataires avec le même nombre de réémissions que ledit satellite 20 considéré.

Par conséquent, dans des modes préférés de mise en oeuvre, chaque satellite 20 qui réémet l'agrégat retire dudit agrégat chaque plan de travail qui a déjà été communiqué au satellite auquel il est destiné. La figure 3 représente un diagramme illustrant le principe de fonctionnement de tels modes de mise en oeuvre du procédé 50 d'acquisition d'images.

Dans l'exemple illustré par la figure 3, on se place de manière non limitative dans le cas où les satellites 20 de la constellation sont à poste sur des positions respectives différentes d'une seule et même orbite Orb1. Sur la figure 3, le nombre $N_{CONS}$ de satellites considéré est égal à 6, et lesdits satellites 20 sont désignés par respectivement $S_1$ à $S_6$. Tel qu'illustré par la figure 3, le satellite $S_1$ est dans cet exemple le satellite qui reçoit initialement l'agrégat à partir de la station sol 40. Le satellite $S_1$ retire de l'agrégat reçu le plan de travail qui lui est destiné, de sorte que l'agrégat réémis comporte à présent cinq plans de travail destinés aux satellites $S_2$ à $S_6$. Dans l'exemple illustré par la figure 3, le satellite $S_1$ réémet l'agrégat à destination ses deux satellites voisins sur l'orbite Orb1, à savoir les satellites $S_2$ et $S_6$. Ainsi, les satellites $S_2$ et $S_6$ sont atteints avec le même nombre de réémissions, à savoir en une réémission. Par conséquent, le satellite $S_2$ peut retirer de l'agrégat le plan de travail qui lui est destiné mais également le plan de travail destiné au satellite $S_6$. De même, le satellite $S_6$ peut retirer de l'agrégat le plan de travail qui lui est destiné mais également le plan de travail destiné au satellite $S_2$. Par conséquent, l'agrégat réémis par le satellite $S_2$ et l'agrégat réémis par le satellite $S_6$ comportent chacun trois plans de travail, à savoir les plans de travail destinés aux satellites $S_3$ à $S_5$. Le satellite $S_2$ réémet l'agrégat à destination du satellite $S_3$, et non à destination du satellite $S_1$, par lequel ledit satellite $S_2$ a reçu ledit agrégat. De même, le satellite $S_6$ réémet l'agrégat uniquement à destination du satellite $S_5$, qui n'a pas encore reçu ledit agrégat. Ainsi, les satellites $S_3$ et $S_5$ sont atteints avec le même nombre de réémissions, à savoir en deux réémissions. Par conséquent, le satellite $S_3$ peut retirer de l'agrégat le plan de travail qui lui est destiné mais également le plan de travail destiné au satellite $S_5$. De même, le satellite $S_5$ peut retirer de l'agrégat le plan de travail qui lui est destiné mais également le plan de travail destiné au satellite $S_3$. Par conséquent, l'agrégat réémis par le satellite $S_3$ et l'agrégat réémis par le satellite $S_5$ comportent chacun un seul plan de travail, à savoir le plan de travail destiné au satellite $S_4$. Il est également possible que, dans un tel cas, seul l'un desdits satellites $S_3$ et $S_5$ réémette l'agrégat à destination du satellite $S_4$.

Par conséquent, dans un tel cas chaque satellite 20 doit pouvoir être capable de déterminer quels plans de travail doivent être retirés de l'agrégat avent réémission. Plusieurs méthodes sont possibles pour permettre à un satellite 20 d'identifier les plans de travail qui doivent être retirés de l'agrégat avant réémission, et le choix d'une méthode particulière ne constitue qu'une variante d'implémentation de l'invention.

Par exemple, le centre 30 de planification d'acquisitions peut organiser l'agrégat en groupes de plans de travail à retirer successivement avant chaque réémission, lesdits groupes de plans de travail pouvant être distingués par chaque satellite 20, par exemple au moyen d'informations de contrôle adaptées incluses dans l'agrégat. Les groupes de plans de travail dépendent du satellite auquel la station sol 40 émet l'agrégat. Dans l'exemple illustré par la figure 3, les différents groupes plans de travail sont par exemple constitués et ordonnés de la manière suivante :

- Groupe 1 : plan de travail du satellite $S_1$, retiré avant la réémission (par le satellite $S_1$),
- Groupe 2 : plans de travail des satellites $S_2$ et $S_6$, retirés avant la réémission par les satellites $S_2$ et $S_6$,
- Groupe 3 : plans de travail des satellites $S_3$ et $S_5$, retirés avant la réémission par les satellites $S_3$ et $S_5$,
- Groupe 4 : plan de travail du satellite $S_4$.

En outre, dans un tel cas, les réémissions de l'agrégat cessent dès lors que celui-ci est vide, c'est-à-dire dès lors que tous les plans de travail qu'il contenait ont été retirés.

Il est à noter que, dans l'exemple illustré par la figure 3, les moyens de communication inter-satellite de chaque satellite 20 sont bidirectionnels (c'est-à-dire adaptés à émettre et recevoir des données) vers deux zones différentes de part et d'autre du satellite 20.

De telles dispositions permettent en effet, à partir du satellite $S_1$ qui reçoit l'agrégat à partir de la station sol 40, de propager ledit agrégat au sein de la constellation de satellites suivant deux directions opposées, à savoir vers l'avant du satellite $S_1$ (c'est-à-dire du côté vers lequel ledit satellite $S_1$ se déplace) et vers l'arrière dudit satellite $S_1$. Ceci reste en outre valable quel que soit le satellite qui reçoit initialement l'agrégat à partir de la station sol 40.

Rien n'exclut cependant, suivant d'autres exemples, d'avoir des moyens de communication inter-satellite monodirectionnels, par exemple qui émettent uniquement vers l'avant et qui reçoivent uniquement depuis l'arrière. Le coût et la complexité des moyens de communication inter-satellites est alors réduit, mais le temps nécessaire pour parcourir l'ensemble de la constellation très supérieur à celui dans le cas de moyens de communication inter-satellite bidirectionnels vers l'avant et vers l'arrière.

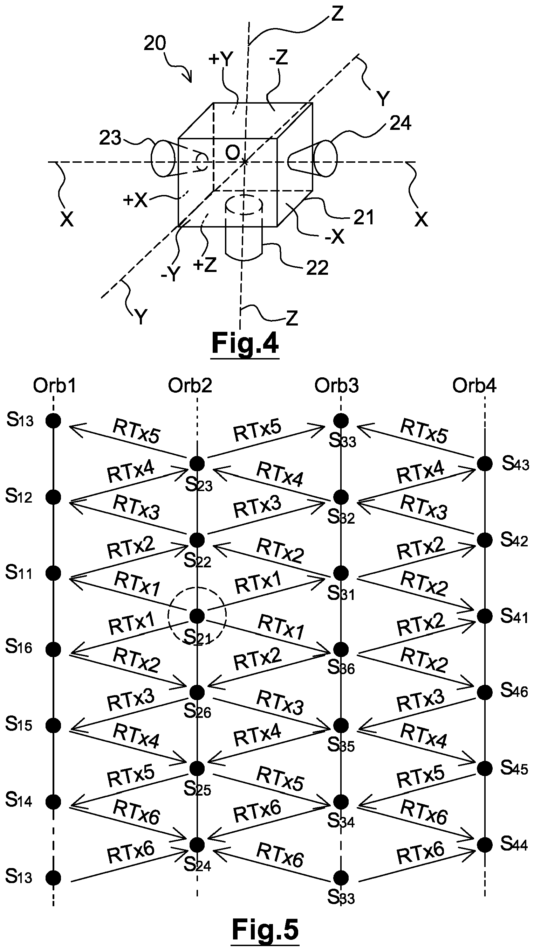

La figure 4 représente schématiquement un mode préféré de réalisation d'un satellite 20 du système 10 d'acquisition d'images.

Tel qu'indiqué précédemment, le satellite 20 comporte un instrument d'observation 21 et un dispositif de contrôle dudit instrument d'observation. En outre, le dispositif de contrôle est adapté à récupérer un plan de travail qui lui est destiné dans un agrégat de plans de travail reçu par les moyens de communication inter-satellite dudit satellite 20, et à réémettre si nécessaire ledit agrégat par lesdits moyens de communication inter-satellite.

Le dispositif de contrôle comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes relatives à la mission d'observation du satellite 20. Alternativement ou en complément, le dispositif de contrôle peut comporter un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes relatives à la mission d'observation dudit satellite 20.

En d'autres termes, le dispositif de contrôle est configuré de façon logicielle (produit programme d'ordinateur spécifique) et/ou matérielle (FPGA, PLD, ASIC, composants électroniques discrets, etc.) pour mettre en oeuvre les différentes étapes relatives à la mission d'observation du satellite 20.

Pour les besoins de la description, on associe au satellite 20 un repère orbital, centré sur un centre de masse O du satellite 20 et comportant trois axes X, Y, Z. Plus particulièrement, l'axe X (également désigné axe de roulis) est parallèle à un vecteur vitesse du satellite 20, l'axe Y (également désigné axe de tangage) est orthogonal au plan de l'orbite du satellite 20, et l'axe Z (également désigné axe de lacet) est orthogonal aux axes X et Y.

Dans la suite de la description, on se place de manière non limitative dans le cas où le satellite 20 comporte un corps 21 sensiblement en forme de parallélépipède rectangle, qui comporte ainsi six faces deux à deux parallèles. En outre, on se place de manière non limitative dans le cas où l'attitude du satellite 20 est contrôlée, pour les besoins de la mission dudit satellite 20, autour d'une attitude, dite « attitude de mission », dans laquelle :

- deux faces opposées du corps 21 du satellite 20 sont sensiblement orthogonales à l'axe Z, désignées par respectivement « face +Z » (par rapport au centre de masse O : du côté de la Terre T) et « face -Z » (du côté opposé à la face +Z) ;
- deux faces opposées du corps 21 du satellite 20 sont sensiblement orthogonales à l'axe X, désignées par respectivement « face +X » (par rapport au centre de masse O : vers l'avant du satellite 20, c'est-à-dire du côté vers lequel se déplace ledit satellite 20) et « face -X » (vers l'arrière du satellite 20, c'est-à-dire du côté opposé à la face +X) ;
- les deux dernières faces opposées du corps 21 du satellite 20, désignées par respectivement « face +Y » et « face -Y », sont sensiblement orthogonales à l'axe Y.

Dans l'exemple non limitatif illustré par la figure 4, l'instrument d'observation 21 est porté par la face +Z du corps 21 du satellite 20, et son axe d'observation est sensiblement orthogonal à ladite face +Z.

Dans le mode préféré de réalisation illustré par la figure 4, les moyens de communication inter-satellite du satellite 20 comportent deux antennes :

- une première antenne 23 qui est portée par la face +X du corps 21 du satellite 20,
- une seconde antenne 24 qui est portée par la face -X dudit corps 21 dudit satellite 20.

Il est à noter que d'autres positions sont possibles pour les antennes 23, 24 des moyens de communication inter-satellite du satellite 20. Par contre, lesdites antennes 23, 24 sont agencées de telle sorte qu'elles sont dirigées vers des zones respectives différentes de part et d'autre dudit satellite 20, de préférence respectivement vers l'avant et vers l'arrière dudit satellite 20.

Les directions principales de rayonnement desdites deux antennes 23, 24, c'est-à-dire les directions dans lesquelles les gains maximaux respectifs desdites deux antennes 23, 24 sont obtenus, sont de préférence fixes par rapport au corps 21 du satellite 20. Dans un tel cas, les antennes 23, 24 sur le corps 21 du satellite 20 peuvent être simples et robustes. Rien n'exclut cependant, suivant d'autres exemples, d'avoir des antennes 23, 24 plus complexes, comme par exemple des antennes réseau adaptées à former des diagrammes de rayonnement variables au cours du temps, ou encore des antennes 23, 24 mobiles par rapport audit corps 21 du satellite 20, afin notamment d'optimiser de manière dynamique le gain dans la direction des autres satellites 20 de la constellation.

Dans la suite de la description, on se place de manière non limitative dans le cas où les moyens de communication inter-satellite sont bidirectionnels vers l'avant et vers l'arrière du satellite 20. Le cas échéant, chacune desdites deux antennes 23, 24 est préférentiellement mise en oeuvre à la fois en émission et en réception, afin de réduire le nombre d'antennes embarquées par le satellite 20. Rien n'exclut cependant, suivant d'autres exemples, d'avoir une antenne de réception et une antenne d'émission distinctes dirigées vers l'avant du satellite 20 et/ou d'avoir une antenne de réception et une antenne d'émission distinctes dirigées vers l'arrière dudit satellite 20.

Dans des modes préférés de réalisation, les directions principales de rayonnement respectives des deux antennes 23, 24 sont, lorsque le satellite 20 est placé dans son attitude de mission, confondues avec l'axe de roulis du repère orbital. En outre, les lobes principaux de rayonnement respectifs desdites deux antennes 23, 24 sont avantageusement invariants par rotation autour de leurs directions principales de rayonnement. En d'autres termes, si l'on considère que le lobe principal de rayonnement d'une antenne 23, 24 est délimité par les directions de rayonnement pour lesquelles le gain est égal au gain maximal $G_{MAX}$ atténué de 3 décibels (dB), alors lesdites directions de rayonnement pour lesquelles le gain est égal à ($G_{MAX}$ - 3 dB) forment un cône de révolution autour de la direction principale de rayonnement.

En pratique, l'attitude du satellite 20 varie autour de l'attitude de mission. En particulier, l'attitude en roulis d'un satellite d'observation est contrôlée pour permettre d'imager des zones terrestres se trouvant de part et d'autre de la projection de l'orbite dudit satellite sur la surface de la Terre T. Du fait que les lobes principaux de rayonnement respectifs desdites deux antennes 23, 24 sont avantageusement invariants par rotation autour de leurs directions principales de rayonnement, et du fait que celles-ci sont confondues dans l'attitude de mission avec l'axe de roulis du satellite 20, on comprend que les variations de l'attitude en roulis du satellite 20 n'empêchent pas d'échanger des données entre satellites. Par conséquent, l'agrégat peut être propagé au sein de la constellation sans que cela n'affecte les acquisitions d'images.

Afin de simplifier la conception des moyens de communication inter-satellite, il est possible notamment d'utiliser la même bande de fréquences pour émettre et recevoir des données, par exemple la bande S. De préférence, l'agrégat est réémis sur la même fréquence centrale que celle sur laquelle il a été reçu. Alternativement ou en complément, il est également possible d'avoir des moyens de communication inter-satellite de type semi-duplex (« half duplex » dans la littérature anglo-saxonne), c'est-à-dire adaptés à émettre des données et à recevoir des données, mais pas simultanément.

Tel qu'illustré par la figure 3, l'invention est applicable dans le cas où les satellites 20 de la constellation sont à poste sur des positions respectives différentes d'une même orbite.

Toutefois, dans des modes préférés de réalisation, les satellites 20 de la constellation sont répartis sur au moins deux orbites différentes, et donc dans au moins deux plans d'orbite différents. En effet, dans un tel cas la surface géographique couverte par la constellation de satellites, sur la durée d'une période orbitale, est plus importante que dans le cas où tous les satellites sont situés dans un même plan d'orbite. De plus, dans le cas d'orbites héliosynchrones réparties dans plusieurs plans d'orbite différents, il est possible d'acquérir des images d'une même zone terrestre pour différentes heures locales au niveau de ladite zone terrestre. En outre, l'agrégat de plans de manoeuvre peut être propagé de proche en proche, d'un satellite sur une orbite à un autre satellite sur une autre orbite, de sorte que l'agrégat peut être communiqué à l'un quelconque des satellites 20 de la constellation, et ce quel que soit le satellite 20 qui a reçu ledit agrégat à partir de la station sol 40.

De préférence, les orbites sur lesquelles sont placés les satellites 20 de la constellation sont toutes de même inclinaison et de même altitude, afin notamment de faciliter le dimensionnement des moyens de communication inter-satellite desdits satellites 20. En outre, il est connu qu'une orbite dérive sensiblement au cours du temps. De préférence, les orbites considérées sont telles que la distance angulaire entre chaque paire d'orbites adjacentes reste sensiblement constante au cours du temps, afin de limiter les variations des distances entre satellites 20 d'orbites différentes, ce qui permet également de faciliter le dimensionnement des moyens de communication inter-satellite. Cette condition est en principe vérifiée dès lors que les orbites considérées ont toutes la même altitude et la même inclinaison.

Dans la suite de la description, on se place de manière de manière non limitative dans le cas où les orbites sur lesquelles sont positionnés les satellites 20 de la constellation sont des orbites héliosynchrones. Rien n'exclut cependant, suivant d'autres exemples, de considérer d'autres types d'orbites terrestres non-géosynchrones.

Tel qu'indiqué précédemment, l'utilisation de satellites 20 sur des orbites différentes permet notamment d'augmenter la surface géographique couverte sur la durée d'une période orbitale. En outre, le nombre de satellites 20 sur chaque orbite peut être grandement réduit, à surface géographique couverte constante sur la durée d'une période orbitale. En particulier, le nombre de satellites 20 et leurs positions respectives sur une même orbite ne doivent pas nécessairement permettre les échanges de données directs entre satellites 20 sur une même orbite, si lesdits échanges de données entre satellites 20 sur une même orbite peuvent être effectués indirectement par l'intermédiaire de satellites 20 sur une ou plusieurs autres orbites.

A cet effet, dans des modes préférés de mise en oeuvre, les satellites 20 sur une même orbite sont répartis de manière régulière, les satellites 20 d'orbites différentes sont décalés les uns par rapport aux autres, et le nombre de satellites sur chaque orbite et le décalage entre satellites d'orbites différentes sont tels que, pour chaque satellite 20 de la constellation :

- les autres satellites 20 sur la même orbite sont masqués par la Terre T,
- au moins deux satellites 20 sur une autre orbite ne sont pas masqués par la Terre T.

Par exemple, si le même nombre $N_{SAT}$ de satellites 20 est placé sur chaque orbite, alors l'écart angulaire entre satellites 20 adjacents sur une même orbite est égal à $360/N_{SAT}$ degrés. En outre, les positions des satellites 20 sur une même orbite sont décalées par rapport aux positions des satellites 20 sur une orbite adjacente par un écart angulaire $\delta\psi$ proche de $360/(2 \cdot N_{SAT})$ degrés, par exemple à $\pm 5$ degrés. Les moyens de communication inter-satellite doivent en outre être configurés de sorte à permettre les échanges de données entre satellites 20 sur des orbites différentes.

La figure 5 représente un diagramme illustrant le principe de fonctionnement du procédé 50 d'acquisition d'images dans le cas où les satellites 20 sont répartis sur quatre orbites Orb1, Orb2, Orb3 et Orb4 différentes. La distance angulaire entre orbites adjacentes, c'est-à-dire entre noeuds ascendants desdites orbites, désignée par ΔLTAN dans la suite de la description, est de préférence la même pour toutes les orbites adjacentes, et de préférence inférieure à 3 heures (ou, de manière équivalente, inférieure à 45°). Par exemple, la distance angulaire ΔLTAN entre orbites adjacentes est égale à 1 heure et 30 minutes (ou égale à 22.5°), avec par exemple les heures solaires locales des noeuds ascendants desdites orbites Orb1, Orb2, Orb3 et Orb4 respectivement égales à 9h45, 11h15, 12h45 et 14h15.

Dans l'exemple illustré par la figure 5, le nombre total de satellites 20 est égal à 24 ($N_{CONS}$ = 24), et le nombre de satellites 20 sur chaque orbite est égal à 6 ($N_{SAT}$ = 6). Par conséquent, l'écart angulaire entre satellites adjacents sur une même orbite est de 60°, et le décalage des positions des satellites 20 sur une même orbite par rapport aux positions des satellites 20 sur une orbite adjacente est par exemple de 30°. En outre, sur la figure 5 :

- les satellites sur l'orbite Orb1 sont désignés par $S_{11}$ à $S_{16}$,
- les satellites sur l'orbite Orb2 sont désignés par $S_{21}$ à $S_{26}$,
- les satellites sur l'orbite Orb3 sont désignés par $S_{31}$ à $S_{36}$,
- les satellites sur l'orbite Orb4 sont désignés par $S_{41}$ à $S_{46}$.

En outre, dans l'exemple illustré par la figure 5, on se place dans le cas où c'est le satellite $S_{21}$ qui reçoit un agrégat de $N_{CONS}$ plans de travail à partir de la station sol 40, et dans le cas où chaque satellite retire de l'agrégat chaque plan de travail qui a déjà été communiqué au satellite auquel il est destiné avant de réémettre ledit agrégat.

Tel qu'illustré par la figure 5, le satellite $S_{21}$ réémet l'agrégat (première réémission, désignée par « RTx1 » sur la figure 5) vers l'avant et l'arrière, à destination des satellites $S_{11}$, $S_{31}$, $S_{16}$ et $S_{36}$, après avoir retiré le plan de travail qui lui était destiné. L'agrégat réémis comporte donc 23 plans de travail.

Ensuite, les satellites $S_{11}$, $S_{31}$, $S_{16}$ et $S_{36}$ réémettent l'agrégat (seconde réémission, désignée par « RTx2 » sur la figure 5) après avoir retiré les plans de travail qui leur étaient destinés. Chaque agrégat réémis comporte donc 19 plans de travail. Les satellites $S_{11}$, $S_{31}$ et $S_{36}$ réémettent l'agrégat vers l'avant, à destination des satellites $S_{22}$, $S_{42}$ et $S_{41}$. Les satellites $S_{16}$, $S_{36}$ et $S_{31}$ réémettent l'agrégat vers l'arrière, à destination des satellites $S_{26}$, $S_{46}$ et $S_{41}$.

Ensuite, les satellites $S_{22}$, $S_{42}$, $S_{26}$ et $S_{46}$ réémettent l'agrégat (troisième réémission, désignée par « RTx3 » sur la figure 5) après avoir retiré les plans de travail qui leur étaient destinés, ainsi que le plan de travail destiné au satellite $S_{41}$. Chaque agrégat réémis comporte donc 14 plans de travail. Les satellites $S_{22}$ et $S_{42}$ réémettent l'agrégat vers l'avant, à destination des satellites $S_{12}$ et $S_{32}$. Les satellites $S_{26}$ et $S_{46}$ réémettent l'agrégat vers l'arrière, à destination des satellites $S_{15}$ et $S_{35}$.

Ensuite, les satellites $S_{12}$, $S_{32}$, $S_{15}$ et $S_{35}$ réémettent l'agrégat (quatrième réémission, désignée par « RTx4 » sur la figure 5) après avoir retiré les plans de travail qui leur étaient destinés. Chaque agrégat réémis comporte donc 10 plans de travail. Les satellites $S_{12}$ et $S_{32}$ réémettent l'agrégat vers l'avant, à destination des satellites $S_{23}$ et $S_{43}$. Les satellites $S_{15}$ et $S_{35}$ réémettent l'agrégat vers l'arrière, à destination des satellites $S_{25}$ et $S_{45}$.

Ensuite, les satellites $S_{23}$, $S_{43}$, $S_{25}$ et $S_{45}$ réémettent l'agrégat (cinquième réémission, désignée par « RTx5 » sur la figure 5) après avoir retiré les plans de travail qui leur étaient destinés. Chaque agrégat réémis comporte donc 6 plans de travail. Les satellites $S_{23}$ et $S_{43}$ réémettent l'agrégat vers l'avant, à destination des satellites $S_{13}$ et $S_{33}$. Les satellites $S_{25}$ et $S_{45}$ réémettent l'agrégat vers l'arrière, à destination des satellites $S_{14}$ et $S_{34}$.

Ensuite, les satellites $S_{13}$, $S_{33}$, $S_{14}$ et $S_{34}$ réémettent l'agrégat (sixième réémission, désignée par « RTx6 » sur la figure 5) après avoir retiré les plans de travail qui leur étaient destinés. Chaque agrégat réémis comporte donc 2 plans de travail. Les satellites $S_{13}$ et $S_{33}$ réémettent l'agrégat vers l'avant, à destination des satellites $S_{24}$ et $S_{44}$. Les satellites $S_{14}$ et $S_{34}$ réémettent l'agrégat vers l'arrière, à destination des satellites $S_{24}$ et $S_{44}$.

Il est à noter qu'il n'est pas forcément nécessaire d'effectuer les réémissions au moyen de tous les satellites indiqués sur la figure 5. Par exemple, au cours de la sixième réémission, il est possible de ne réémettre qu'au moyen d'un ou de certains des satellites $S_{13}$, $S_{33}$, $S_{14}$ et $S_{34}$, dès lors que les satellites $S_{24}$ et $S_{44}$ reçoivent les plans de travail qui leur sont destinés. Notamment il est possible de ne réémettre, au cours de la sixième réémission, qu'au moyen du satellite $S_{33}$ et/ou du satellite $S_{34}$. De manière plus générale, on constate que tous les satellites de la constellation peuvent être atteints en ne réémettant qu'au moyen des satellites sur les orbites Orb2 et Orb3. Il est par conséquent possible, suivant d'autres exemples, de ne réémettre l'agrégat qu'au moyen des satellites sur les orbites Orb2 et Orb3.

La durée $D_{CONS}$ nécessaire, à partir de l'instant de réception de l'agrégat par le satellite $S_{21}$, pour effectuer l'ensemble des réémissions représentées sur la figure 5 et ainsi communiquer les 24 plans de travail aux différents satellites 20 de la constellation, est de l'ordre de :

$$D_{CONS} \approx \left( \frac{23}{24} + \frac{19}{24} + \frac{14}{24} + \frac{10}{24} + \frac{6}{24} + \frac{2}{24} \right) \cdot \frac{V}{R} = \frac{74}{24} \cdot \frac{V}{R}$$

expression dans laquelle V correspond à la quantité de données initialement incluse dans l'agrégat reçu de la station sol 40 (correspondant à 24 plans de travail) et R correspond au débit des communications inter-satellite.

Par exemple, si l'on considère que la quantité de données V initialement incluse dans l'agrégat correspond à 500 kilobits (kbits), et que le débit R des communications inter-satellite correspond à 10 kilobits par seconde (kbps), alors la durée $D_{CONS}$ est de l'ordre de 2 minutes et 34 secondes. On comprend donc qu'il est possible d'actualiser le plan de travail de chaque satellite 20 de la constellation dans un délai beaucoup plus court qu'avec les solutions de l'art antérieur. Même en considérant un débit R des communications inter-satellite de 2 kbps, la durée $D_{CONS}$, qui est alors de l'ordre de 12 minutes et 50 secondes, permet d'actualiser le plan de travail de chaque satellite 20 de la constellation dans un délai beaucoup plus court qu'avec les solutions de l'art antérieur.

Tel qu'indiqué précédemment, les paramètres de la constellation, en termes d'orbites et de positions sur orbite respectives des différents satellites 20, mais également les moyens de communication inter-satellite respectifs des différents satellites 20, doivent être dimensionnés de sorte que chaque satellite 20 peut échanger des données avec l'un quelconque des autres satellites 20 de la constellation, directement ou par l'intermédiaire d'un ou plusieurs autres satellites 20 de la constellation. Le tableau ci-dessous donne des exemples nullement limitatifs de configurations adaptées de satellites 20.

Dans le tableau ci-dessous, on se place à titre d'exemple dans le cas où les satellites 20 sont tous du type illustré par la figure 4, comportant une antenne 23 sur la face +X et une antenne 24 sur la face -X du corps 21 du satellite 20 dont les lobes principaux de rayonnement, invariants par rotation autour de leurs directions principales de rayonnement respectives, sont sensiblement de même largeur désignée par $\Delta\theta$. Il est à noter que la largeur $\Delta\theta$ correspond à l'angle complet du cône révolution formé par le lobe principal de rayonnement autour de la direction principale de rayonnement, de sorte qu'une largeur $\Delta\theta$ de 60° correspond à une plage angulaire de $\pm30°$ autour de la direction principale de rayonnement. En outre, on se place également, à titre d'exemple, dans le cas où les satellites 20 sont placés sur au moins deux orbites héliosynchrones de même altitude 500 kilomètres. Enfin, on se place également, à titre d'exemple, dans le cas où :

- les satellites 20 sur une même orbite sont répartis de manière régulière (tous les $360/N_{SAT}$ degrés), le nombre $N_{SAT}$ étant tel que, pour chaque satellite 20 de la constellation, les autres satellites 20 sur la même orbite sont masqués par la Terre T,
- les satellites 20 d'orbites différentes sont décalés les uns par rapport aux autres par un écart angulaire $\delta\psi$ tel que, pour chaque satellite 20 de la constellation, au moins deux satellites 20 sur une autre orbite ne sont pas masqués par la Terre T.

| $N_{SAT}$ | $\Delta$LTAN | $\delta\psi$ | $d_{MIN}$ / $d_{MAX}$ (kilomètres) | $\Delta\theta$ |
|---|---|---|---|---|
| 6 | 1h00 | 32° | 3530 / 3950 | 56° |
| 6 | 1h30 | 33° | 3500 / 4400 | 80° |
| 6 | 2h00 | 34° | 3450 / 4930 | 100° |
| 8 | 1h30 | 25.5° | 2630 / 3750 | 96° |
| 8 | 2h00 | 26.5° | 2600 / 4380 | 116° |

Le tableau ci-dessus donne donc six exemples de configurations adaptées des satellites 20, en termes de paramètres de la constellation, en particulier la distance angulaire $\Delta$LTAN entre orbites adjacentes et l'écart angulaire $\delta\psi$ entre les satellites 20 d'orbites adjacentes, et en termes de caractéristiques des moyens de communication inter-satellite, en particulier la largeur $\Delta\theta$ des lobes principaux de rayonnement des antennes 23, 24.

Concernant plus particulièrement l'écart angulaire $\delta\psi$ entre les satellites 20 d'orbites adjacentes, il est à noter que celui-ci correspond au décalage entre la position sur orbite d'un premier satellite 20 et la position d'un second satellite 20, qui correspond au satellite 20 le plus proche dudit premier satellite 20 sur l'orbite adjacente considérée, du côté avant dudit premier satellite 20. Le tableau ci-dessus indique également la distance minimale $d_{MIN}$ et la distance maximale $d_{MAX}$ entre satellites adjacents d'orbites adjacentes. En effet, la distance entre deux satellites 20 adjacents d'orbites adjacentes varie au cours de la période orbitale, et est maximale ($d_{MAX}$) lorsque lesdits satellites sont à proximité de l'équateur, et est minimale ($d_{MIN}$) lorsque lesdits satellites sont à proximité du pôle Nord ou du pôle du Sud, du fait que les orbites se croisent à proximité du pôle Nord et du pôle Sud.

Les écarts angulaires $\delta\psi$ indiqués dans le tableau ci-dessus, sont légèrement différents de $360/(2 \cdot N_{SAT})$ degrés. Lesdits écarts angulaires $\delta\psi$ indiqués dans le tableau ci-dessus permettent d'équilibrer les distances entre :

- d'une part, un premier satellite et un second satellite correspondant au satellite le plus proche du premier satellite, sur une orbite adjacente à celle dudit premier satellite et du côté avant dudit premier satellite,
- d'autre part, le premier satellite et un troisième satellite correspondant au satellite le plus proche dudit premier satellite, sur une orbite adjacente à celle dudit premier satellite et du côté arrière dudit premier satellite.

**Revendications**

1. Procédé (50) d'acquisition d'images au moyen d'une constellation de satellites (20) en orbite terrestre non-géosynchrone, chaque satellite comportant un instrument d'observation (21) commandé selon un plan de travail comportant une liste d'acquisitions à réaliser, lesdits satellites (20) comportant des moyens de communication inter-satellite respectifs et étant configurés de sorte que chaque satellite peut échanger des données avec l'un quelconque des autres satellites de la constellation, directement ou par l'intermédiaire d'un ou de plusieurs autres satellites de la constellation, **caractérisé en ce que** ledit procédé (50) comporte :

    - la formation (51) d'un agrégat de plans de travail destinés à différents satellites (20) de la constellation,
    - l'émission (52), par une station sol (40), de l'agrégat à destination d'un satellite (20) de la constellation,
    - la réémission (54), par le satellite ayant reçu l'agrégat à partir de la station sol, dudit agrégat à destination d'au moins un autre satellite de la constellation,

    et **en ce que** chaque satellite (20) qui reçoit l'agrégat à partir d'un autre satellite réémet ledit agrégat à destination d'au moins un autre satellite de la constellation si ledit agrégat comporte un plan de travail qui n'a pas encore été communiqué au satellite auquel il est destiné, chaque satellite récupérant, dans l'agrégat reçu, le plan de travail qui lui est destiné.

2. Procédé (50) selon la revendication 1, dans lequel chaque satellite (20) qui récupère un plan de travail retire ledit plan de travail de l'agrégat avant de réémettre ledit agrégat.

3. Procédé (50) selon l'une des revendications précédentes, dans lequel chaque satellite (20) qui réémet l'agrégat retire dudit agrégat chaque plan de travail qui a déjà été communiqué au satellite auquel il est destiné.

4. Procédé (50) selon l'une des revendications précédentes, dans lequel l'agrégat comporte une information de contrôle permettant à un satellite (20) de déterminer si l'agrégat reçu doit être réémis.

5. Procédé (50) selon la revendication 4, dans lequel l'information de contrôle correspond à un compteur de réémissions dont la valeur est actualisée par les satellites (20) ou à un identifiant du satellite (20) ayant reçu l'agrégat à partir de la station sol (40).

6. Système (10) d'observation comportant une constellation de satellites (20) en orbite terrestre non-géosynchrone, chaque satellite (20) comportant un instrument d'observation (21) et un dispositif de contrôle configuré pour commander ledit instrument d'observation selon un plan de travail comportant une liste d'acquisitions à réaliser, lesdits satellites (20) comportant des moyens de communication inter-satellite respectifs et sont configurés de sorte que chaque satellite peut échanger des données avec l'un quelconque des autres satellites de la constellation, directement ou par l'intermédiaire d'un ou de plusieurs autres satellites de la constellation, **caractérisé en ce que** le dispositif de contrôle de chaque satellite (20) est configuré pour récupérer un plan de travail qui lui est destiné dans un agrégat de plans de travail reçu par les moyens de communication inter-satellite dudit satellite, et pour réémettre ledit agrégat par lesdits moyens de communication inter-satellite si ledit agrégat comporte un plan de travail qui n'a pas encore été communiqué à un satellite de la constellation.

**7.** Système (10) selon la revendication 6, dans lequel les satellites (20) de la constellation sont répartis sur au moins deux orbites différentes de même inclinaison et de même altitude.

**8.** Système (10) selon l'une des revendications 6 à 7, dans lequel plusieurs satellites (20) sont répartis de manière régulière sur chaque orbite, les satellites d'orbites différentes sont décalés les uns par rapport aux autres, et le nombre de satellites sur chaque orbite et le décalage entre satellites d'orbites différentes sont tels que, pour chaque satellite :

- les autres satellites sur la même orbite sont masqués par la Terre,
- au moins deux satellites sur une autre orbite ne sont pas masqués par la Terre.

**9.** Système (10) selon l'une des revendications 6 à 8, dans lequel les orbites des satellites (20) de la constellation sont des orbites héliosynchrones.

**10.** Système (10) selon l'une des revendications 6 à 9, dans lequel les moyens de communication inter-satellite de chaque satellite sont bidirectionnels vers deux zones différentes de part et d'autre dudit satellite.

**11.** Système (10) selon l'une des revendications 6 à 10, dans lequel les moyens de communication inter-satellite de chaque satellite comportent deux antennes (23, 24) dirigées vers des zones respectives différentes de part et d'autre dudit satellite.

**12.** Système (10) selon la revendication 11, dans lequel les moyens de communication inter-satellite sont adaptés à émettre et à recevoir des données par chacune desdites deux antennes.

**13.** Système (10) selon l'une des revendications 11 à 12, dans lequel, pour chaque satellite (20), les directions principales de rayonnement respectives des deux antennes (23, 24) sont fixes par rapport à un corps (21) dudit satellite (20).

**14.** Système (10) selon l'une des revendications 11 à 13, dans lequel, pour chaque satellite (20), les directions principales de rayonnement respectives des deux antennes (23, 24) sont, lorsque ledit satellite est placé dans une attitude de mission, confondues avec un axe de roulis dudit satellite, et les lobes principaux de rayonnement respectifs desdites deux antennes sont invariants par rotation autour de leurs directions principales de rayonnement.

**15.** Système (10) selon l'une des revendications 6 à 14, dans lequel les moyens de communication inter-satellite de chaque satellite (20) émettent et reçoivent des données dans la même bande de fréquence.

**16.** Système (10) selon l'une des revendications 6 à 15, dans lequel les moyens de communication inter-satellite de chaque satellite sont de type semi-duplex.

**17.** Système (10) selon l'une des revendications 6 à 16, comportant un centre (30) de planification d'acquisitions configuré pour former un agrégat de plans de travail destinés à différents satellites de la constellation, et une station sol (40) adaptée à émettre ledit agrégat à destination d'un satellite (20) de la constellation.

**Patentansprüche**

**1.** Verfahren (50) zur Aufnahme von Bildern mittels einer Konstellation von Satelliten (20) in nicht geosynchroner Erdumlaufbahn, wobei jeder Satellit ein Beobachtungsinstrument (21) umfasst, das gemäß einem Arbeitsplan angesteuert wird, der eine Liste von auszuführenden Aufnahmen umfasst, wobei die Satelliten (20) jeweilige Intersatellitenkommunikationsmittel umfassen und so konfiguriert sind, dass jeder Satellit direkt oder mit Hilfe von einem oder mehreren anderen Satelliten der Konstellation Daten mit einem der anderen Satelliten der Konstellation austauschen kann, **dadurch gekennzeichnet, dass** das Verfahren (50) umfasst:

- Bilden (51) eines Clusters von Arbeitsplänen, die für verschiedene Satelliten (20) der Konstellation bestimmt sind,
- Senden (52), von einer Bodenstation (40), des Clusters an einen Satelliten (20) der Konstellation,
- Weitersenden (54), von dem Satelliten, der das Cluster von der Bodenstation empfangen hat, des Clusters an mindestens einen anderen Satelliten der Konstellation, und dadurch, dass jeder Satellit (20), der das Cluster von einem anderen Satelliten empfängt, das Cluster an mindestens einen anderen Satelliten der Konstellation weitersendet, wenn das Cluster einen Arbeitsplan umfasst, der dem Satelliten, für den er bestimmt ist, noch nicht kommuniziert wurde, wobei jeder Satellit aus dem empfangenen Cluster den Arbeitsplan entnimmt, der für ihn bestimmt ist.

2. Verfahren (50) nach Anspruch 1, wobei jeder Satellit (20), der einen Arbeitsplan entnimmt, den Arbeitsplan aus dem Cluster entfernt, bevor er das Cluster weitersendet.

3. Verfahren (50) nach einem der vorstehenden Ansprüche, wobei jeder Satellit (20), der das Cluster weitersendet, jeden Arbeitsplan aus dem Cluster entfernt, der dem Satelliten, für den er bestimmt ist, bereits kommuniziert wurde.

4. Verfahren (50) nach einem der vorstehenden Ansprüche, wobei das Cluster eine Steuerinformation umfasst, die es einem Satelliten (20) ermöglicht, zu bestimmen, ob das empfangene Cluster weitergesendet werden muss.

5. Verfahren (50) nach Anspruch 4, wobei die Steuerinformation einem Weitersendezähler, dessen Wert von den Satelliten (20) aktualisiert wird, oder einer Kennung des Satelliten (20) entspricht, der das Cluster von der Bodenstation (40) empfangen hat.

6. Beobachtungssystem (10), das eine Konstellation von Satelliten (20) in nicht geosynchroner Erdumlaufbahn umfasst, wobei jeder Satellit (20) ein Beobachtungsinstrument (21) und eine Steuervorrichtung umfasst, die dafür konfiguriert ist, das Beobachtungsinstrument gemäß einem Arbeitsplan anzusteuern, der eine Liste von auszuführenden Aufnahmen umfasst, wobei die Satelliten (20) jeweilige Intersatellitenkommunikationsmittel umfassen und so konfiguriert sind, dass jeder Satellit direkt oder mit Hilfe von einem oder mehreren anderen Satelliten der Konstellation Daten mit einem der anderen Satelliten der Konstellation austauschen kann, **dadurch gekennzeichnet, dass** die Steuervorrichtung jedes Satelliten (20) dafür konfiguriert ist, aus einem Cluster von Arbeitsplänen, das von den Intersatellitenkommunikationsmittel des Satelliten empfangen wurde, einen Arbeitsplan zu entnehmen, der für ihn bestimmt ist, und dafür, das Cluster über die Intersatellitenkommunikationsmittel weiterzusenden, wenn das Cluster einen Arbeitsplan umfasst, der einem Satelliten der Konstellation noch nicht kommuniziert wurde.

7. System (10) nach Anspruch 6, wobei die Satelliten (20) der Konstellation auf mindestens zwei verschiedenen Umlaufbahnen derselben Neigung und derselben Höhe verteilt sind.

8. System (10) nach einem der Ansprüche 6 bis 7, wobei mehrere Satelliten (20) gleichmäßig auf jeder Umlaufbahn verteilt sind, die Satelliten verschiedener Umlaufbahnen zueinander versetzt sind, und die Anzahl von Satelliten auf jeder Umlaufbahn und der Versatz zwischen Satelliten verschiedener Umlaufbahnen derart sind, dass für jeden Satelliten:

   - die anderen Satelliten auf derselben Umlaufbahn von der Erde verdeckt werden,
   - mindestens zwei Satelliten auf einer anderen Umlaufbahn nicht von der Erde verdeckt werden.

9. System (10) nach einem der Ansprüche 6 bis 8, wobei die Umlaufbahnen der Satelliten (20) der Konstellation sonnensynchrone Umlaufbahnen sind.

10. System (10) nach einem der Ansprüche 6 bis 9, wobei die Intersatellitenkommunikationsmittel jedes Satelliten in Richtung zweier verschiedener Zonen auf beiden Seiten des Satelliten bidirektional sind.

11. System (10) nach einem der Ansprüche 6 bis 10, wobei die Intersatellitenkommunikationsmittel jedes Satelliten zwei Antennen (23, 24) umfassen, die in Richtung jeweiliger verschiedener Zonen auf beiden Seiten des Satelliten gerichtet sind.

12. System (10) nach Anspruch 11, wobei die Intersatellitenkommunikationsmittel dazu geeignet sind, über jede der zwei Antennen Daten zu senden und zu empfangen.

13. System (10) nach einem der Ansprüche 11 bis 12, wobei bei jedem Satelliten (20) die jeweiligen Hauptstrahlungsrichtungen der zwei Antennen (23, 24) in Bezug auf einen Körper (21) des Satelliten (20) fest sind.

14. System (10) nach einem der Ansprüche 11 bis 13, wobei sich bei jedem Satelliten (20), wenn der Satellit in einer Einsatzstellung platziert ist, die jeweiligen Hauptstrahlungsrichtungen der zwei Antennen (23, 24) mit einer Rollachse des Satelliten decken, und die jeweiligen Hauptstrahlungskeulen der zwei Antennen um ihre Hauptstrahlungsrichtungen herum rotationsinvariant sind.

15. System (10) nach einem der Ansprüche 6 bis 14, wobei die Intersatellitenkommunikationsmittel jedes Satelliten (20) Daten in demselben Frequenzband senden und empfangen.

16. System (10) nach einem der Ansprüche 6 bis 15, wobei die Intersatellitenkommunikationsmittel jedes Satelliten vom Halbduplex-Typ sind.

17. System (10) nach einem der Ansprüche 6 bis 16, das ein Zentrum (30) zur Planung von Aufnahmen, welches dafür konfiguriert ist, ein Cluster von Arbeitsplänen zu bilden, die für verschiedene Satelliten der Konstellation bestimmt sind, und eine Bodenstation (40) umfasst, die dazu geeignet ist, das Cluster an einen Satelliten (20) der Konstellation zu senden.

**Claims**

1. A method (50) for acquiring images by means of a constellation of satellites (20) in non-geosynchronous Earth orbit, each satellite comprising an observation instrument (21) controlled according to a work plan comprising a list of acquisitions to be performed, said satellites (20) comprising respective inter-satellite communication means, and being configured so that each satellite may exchange data with any of the other satellites of the constellation, directly or via one or more other satellites of the constellation, **characterized in that** said method (50) comprises:

   - the formation (51) of an aggregate of work plans intended for different satellites (20) of the constellation,
   - the transmission (52), by a ground station (40), of the aggregate to a satellite (20) of the constellation,
   - the retransmission (54), by the satellite that has received the aggregate from the ground station, of said aggregate to at least one other satellite of the constellation,

   and **in that** each satellite (20) that receives the aggregate from another satellite retransmits said aggregate to at least one other satellite of the constellation if said aggregate comprises a work plan which has not yet been communicated to the satellite for which it is intended, each satellite retrieving, from the received aggregate, the work plan which is intended for it.

2. The method (50) as claimed in claim 1, wherein each satellite (20) retrieving a work plan removes said work plan from the aggregate before retransmitting said aggregate.

3. The method (50) as claimed in any of the preceding claims, wherein each satellite (20) retransmitting the aggregate removes from said aggregate each work plan which has already been communicated to the satellite for which it is intended.

4. The method (50) as claimed in any of the preceding claims, wherein said aggregate comprises control information enabling a satellite (20) to determine whether the received aggregate is to be retransmitted.

5. The method (50) as claimed in claim 4, wherein the control information is a retransmission counter whose value is updated by the satellites (20), or is an identifier of the satellite (20) that has received the aggregate from the ground station (40).

6. An observation system (10) comprising a constellation of satellites (20) in non-geosynchronous Earth orbit, each satellite (20) comprising an observation instrument (21) and a control device configured to control said observation instrument according to a work plan comprising a list of acquisitions to be performed, said satellites (20) comprising respective inter-satellite communication means, and are configured so that each satellite may exchange data with any of the other satellites of the constellation, directly or via one or more other satellites of the constellation, **characterized in that** the control device of each satellite (20) is configured to retrieve a work plan intended for it from an aggregate of work plans received by the inter-satellite communication means of said satellite, and to retransmit said aggregate via said inter-satellite communication means if said aggregate comprises a work plan which has not yet been communicated to a satellite of the constellation.

7. The system (10) as claimed in claim 6, wherein the satellites (20) of the constellation are distributed among at least two different orbits having the same inclination and the same altitude.

8. The system (10) as claimed in either of claims 6 and 7, wherein a plurality of satellites (20) are distributed regularly over each orbit, the satellites in different orbits are offset relative to one another, and the number of satellites in each orbit and the offset between satellites in different orbits are such that, for each satellite,

- the other satellites in the same orbit are masked by the Earth, and
- at least two satellites in another orbit are not masked by the Earth.

9. The system (10) as claimed in any of claims 6 to 8, wherein the orbits of the satellites (20) of the constellation are sun-synchronous orbits.

10. The system (10) as claimed in any of claims 6 to 9, wherein the inter-satellite communication means of each satellite are bidirectional toward two different areas on either side of said satellite.

11. The system (10) as claimed in any of claims 6 to 10, wherein the inter-satellite communication means of each satellite comprise two antennas (23, 24) directed toward two different areas on either side of said satellite.

12. The system (10) as claimed in claim 11, wherein the inter-satellite communication means are adapted to transmit and receive data via each of said two antennas.

13. The system (10) as claimed in either of claims 11 and 12, wherein, for each satellite (20), the respective main directions of radiation of the two antennas (23, 24) are fixed relative to a body (21) of said satellite (20).

14. The system (10) as claimed in any of claims 11 to 13, wherein, for each satellite (20), the respective main directions of radiation of the two antennas (23, 24), when said satellite is placed in a mission attitude, coincide with a roll axis of said satellite, and the respective main radiation lobes of said two antennas are globally invariant by rotation about their main directions of radiation.

15. The system (10) as claimed in any of claims 6 to 14, wherein the inter-satellite communication means of each satellite (20) transmit and receive data in the same frequency band.

16. The system (10) as claimed in any of claims 6 to 15, wherein the inter-satellite communication means of each satellite are of the half-duplex type.

17. The system (10) as claimed in any of claims 6 to 16, comprising an acquisition planning center (30) configured to form an aggregate of work plans intended for different satellites of the constellation, and a ground station (40) adapted to transmit said aggregate to a satellite (20) of the constellation.

**Fig.1**

**Fig.2**

**Fig.3**

**Fig.4**

**Fig.5**

**EP 3 375 111 B1**

## RÉFÉRENCES CITÉES DANS LA DESCRIPTION

**Documents brevets cités dans la description**

- DE 102008006432